# EUROPEAN PATENT APPLICATION

(11) **EP 4 183 837 A1**
(43) Date of publication of application: **24.05.2023**
(21) Application number: 21842853.0
(22) Date of filing: 07.07.2021
(51) Int. Cl.: C08L 101/00, C08F 8/20, C08F 214/18, C08L 23/28, C08L 27/12, D04H 1/42, D06M 15/227

(54) **CHARGEABILITY IMPARTING AGENT, CHARGEABLE RESIN COMPOSITION AND CHARGED NONWOVEN FABRIC**

(30) Priority: 17.07.2020 JP 2020122555
(71) Applicant: Sanyo Chemical Industries, Ltd., Kyoto-shi, Kyoto 605-0995 (JP)
(72) Inventor: IKEDA, Yuki, Kyoto-shi, Kyoto 605-0995 (JP); NAKAMURA, Yasushi, Kyoto-shi, Kyoto 605-0995 (JP); TOKUNAGA, Hironobu, Kyoto-shi, Kyoto 605-0995 (JP)
(74) Representative: Mewburn Ellis LLP
(86) International application number: PCT/JP2021/025587
(87) International publication number: WO 2022/014431

(57) **Abstract**

The present invention aims to provide a chargeability imparting agent that imparts a good appearance to charged nonwoven fabrics. The present invention relates to a chargeability imparting agent (Z) for thermoplastic resins, including an organic fluorine-modified polyolefin (A) containing at least one organic group in at least one of a molecular end or a molecular side chain of the polyolefin, the at least one organic group containing a fluorohydrocarbon group; a chargeable resin composition (Y0) containing the chargeability imparting agent (Z) for thermoplastic resins and a thermoplastic resin (B); and a charged nonwoven fabric (Y) obtainable by processing the chargeable resin composition (Y0).

## Description

### TECHNICAL FIELD

The present invention relates to chargeability imparting agents. The present invention also relates to chargeable resin compositions. The present invention also relates to charged nonwoven fabrics.

### BACKGROUND ART

Charged nonwoven fabrics used for filters and masks that have been developed include charged nonwoven fabrics containing acrylic fibers and polyolefin fibers containing phosphorus additives and sulfur additives (e.g., Patent Literature 1).

### CITATION LIST

### - Patent Literature

Patent Literature 1: JP 2002-249963 A

### SUMMARY OF INVENTION

### - Technical Problem

The above-described technique uses phosphorus additives and sulfur additives as chargeability imparting agents. However, the technique cannot provide nonwoven fabrics having sufficient surface appearances.

The present invention aims to provide a chargeability imparting agent that imparts a good appearance to charged nonwoven fabrics.

### - Solution to Problem

As a result of extensive studies to solve the above problem, the present inventors arrived at the present invention. That is, the present invention relates to a chargeability imparting agent (Z) for thermoplastic resins, including an organic fluorine-modified polyolefin (A) containing at least one organic group in at least one of a molecular end or a molecular side chain of the polyolefin, the at least one organic group containing a fluorohydrocarbon group; a chargeable resin composition (Y0) containing the chargeability imparting agent (Z) for thermoplastic resins and a thermoplastic resin (B); and a charged nonwoven fabric (Y) obtainable by processing the chargeable resin composition (Y0).

### - Advantageous Effects of Invention

The chargeability imparting agent (Z) for thermoplastic resins of the present invention has the following effects.
(1) The chargeability imparting agent (Z) imparts a good appearance to the charged nonwoven fabric (Y).
(2) The chargeability imparting agent (Z) imparts excellent chargeability to the charged nonwoven fabric (Y). Thereby, the charged nonwoven fabric (Y) is excellent in dust collection.

### DESCRIPTION OF EMBODIMENTS

### <Organic fluorine-modified polyolefin (A)>

An organic fluorine-modified polyolefin (A) in the present invention contains at least one organic group in at least one of a molecular end or a molecular side chain of the polyolefin, the at least one organic group containing a fluorohydrocarbon group.

The organic fluorine-modified polyolefin (A) preferably has a fluorine content of 0.1 to 50% by weight, more preferably 0.3 to 40% by weight, still more preferably 0.5 to 30% by weight, particularly preferably 1 to 10% by weight, based on the weight of the polyolefin (A), from the viewpoint of chargeability and the appearance of the charged nonwoven fabric (Y) described later.

The fluorine content of the polyolefin (A) in the present invention can be determined using a fluorescent X-ray meter based on a calibration curve prepared for a fluorine-containing compound whose fluorine content is known.

An example of the fluorescent X-ray meter is "X-ray fluorescence spectrometer LAB CENTER XRF-1800" (trade name) available from Shimadzu Corporation.

The fluorine content (% by weight) in the examples was determined by the above method.

The organic fluorine-modified polyolefin (A) preferably has a number average molecular weight (hereinafter sometimes abbreviated as Mn) of 500 to 1,000,000, more preferably 1,000 to 100,000, from the viewpoint of the dispersibility of the polyolefin (A) in the thermoplastic resin (B) and prevention of bleeding of the polyolefin (A) from the surface of the charged nonwoven fabric (Y) described later.

The Mn and the weight average molecular weight (Mw) of the polymer in the present invention can be measured by gel permeation chromatography (GPC) under the following conditions.
(Exemplary) device: "HLC-8120" available from Tosoh Corporation
(Exemplary) column: "TSKgel GMHXL" (× 2), "TSKgel Multipore HXL-M" (× 1)
Sample solution: 0.3% by weight o-dichlorobenzene solution
Amount of solution added: 100 ul
Flow rate: 1 mL/min
Measurement temperature: 135°C
Detector: refractive index detector

Reference material: 12 items of standard polystyrene (TSK standard POLYSTYRENE) (molecular weight: 500, 1,050, 2,800, 5,970, 9,100, 18,100, 37,900, 96,400, 190,000, 355,000, 1,090,000, 2,890,000) (Tosoh Corporation)

Examples of the organic fluorine-modified polyolefin (A) include the following (A1) to (A3), each of which can be produced by a known method:
(A1) a copolymer containing as structural units a fluorine compound (b1) having a double bond and at least one of a polyolefin (a1) having a polymerizable unsaturated bond or an olefin (am);
(A2) a reaction product of a compound (a2) obtainable by modifying a polyolefin (a1) having a polymerizable unsaturated bond with an α,β-unsaturated carboxylic acid or an α,β-unsaturated carboxylic anhydride, and a fluorine compound (b2) having a group capable of reacting with a carboxy group or an anhydride group; and
(A3) a reaction product of a compound (a3) obtainable by oxidizing or modifying through hydroformylation a polyolefin (a1) having a polymerizable unsaturated bond, and a fluorine compound (b2) having a group capable of reacting with a carboxy group or an anhydride group.

In one embodiment, the organic fluorine-modified polyolefin (A) is preferably at least one selected from the group consisting of the (A1) to (A3).

The (A1) to (A3) may each be used alone or two or more of these may be used in combination. Preferred among the (A1) to (A3) is the (A2) from an industrial point of view.

Examples of the olefin (am) in the present invention include C2-C30 olefins. Examples of the C2-C30 olefins include C2-C30 α-olefins and C4-C30 dienes.

Examples of the C2-C30 α-olefins include ethylene, propylene, 1-butene, 4-methyl-1-pentene, 1-pentene, 1-octene, 1-decene, 1-dodecene, 1-icosene, and 1-tetracosene.

Examples of the C4-C30 dienes include butadiene, isoprene, cyclopentadiene, and 1,11-dodecadiene.

From the viewpoint of molecular weight control, preferred among the C2-C30 olefins are ethylene, propylene, a C4-C12 α-olefin, butadiene, isoprene, and mixtures of these, with ethylene, propylene, a C4-C10 α-olefin, butadiene, and mixtures of these being more preferred and ethylene, propylene, butadiene, and mixtures of these being still more preferred.

Examples of the polyolefin (a1) having a polymerizable unsaturated bond in the present invention include polyolefins and oligomers thereof (e.g., high density, medium density, or low density polyethylene, propylene polymers, polybutene, poly-4-methylpentene, ethylene/α-olefin copolymers, and propylene/α-olefin copolymers), polyolefin elastomers (e.g., ethylene/propylene rubber, ethylene/propylene/diene copolymer rubber, ethylene/vinyl acetate copolymers, butyl rubber, butadiene rubber, low crystalline ethylene/propylene copolymers, propylene/butene copolymers, ethylene/vinylester copolymers, ethylene/acrylic ester copolymers, and a blend of polypropylene and ethylene/propylene rubber), thermally degraded products (a-01) of these, a polyolefin (a1-1) having a carboxy group at least at one end of the polymer, a polyolefin (a1-2) having a hydroxy group at least at one end of the polymer, a polyolefin (a1-3) having an amino group at least at one end of the polymer, and a polyolefin (a1-4) having an isocyanate group at least at one end of the polymer.

The term "end" in the present invention refers to a terminal portion where the repeated structure of the monomer unit constituting the polymer terminates. The term "one end" refers to either one end in the main chain of the polymer.

Preferred among these examples of the polyolefin (a1) are the thermally degraded products (a-01) from an industrial point of view.

Non-limiting examples of the thermally degraded products (a-01) include those obtained by heating polyolefins, oligomers thereof, or polyolefin elastomers thereof in an inert gas (preferably those obtained by heating at 300°C to 450°C for 0.5 to 10 hours, for example, by the method described in JP H03-62804 A) and those obtained by thermally degrading these by heating in the air.

Examples of the polyolefins used in the thermal degradation method include (co)polymers of one or more C2-C30 (preferably C2-C12, more preferably C2-C10) olefins (Mn is preferably 12,000 to 100,000, more preferably 15,000 to 70,000 and the melt flow rate (hereafter, abbreviated as MFR, unit: g/10 min) is preferably 0.5 to 150, more preferably 1 to 100). Here, MFR refers to a numerical value representing the melt viscosity of the resin. A larger numerical value indicates a lower melt viscosity. The MFR may be measured in conformity with the method specified in JIS K 7210 (2014). In the case of polypropylene, for example, the measurement is performed at 230°C at a load of 2.16 kgf.

The polyolefin (a1-1) having a carboxy group at least at one end of the polymer may be one prepared by introducing a carboxy group to at least one end of a polyolefin (a1-01) with at least one end being modifiable; the polyolefin (a1-2) having a hydroxy group at least at one end of the polymer may be one prepared by introducing a hydroxy group to at least one end of the polyolefin (a1-01); the polyolefin (a1-3) having an amino group at least at one end of the polymer may be one prepared by introducing an amino group to at least one end of the polyolefin (a1-01); and the polyolefin (a1-4) having an isocyanate group at least at one end of the polymer may be one prepared by introducing an isocyanate group to at least one end of the polyolefin (a1-01).

Examples of the polyolefin (a1-01) with at least one end being modifiable include: polyolefins obtainable by (co)polymerization ((co)polymerization refers to polymerization or copolymerization, the same shall apply hereinafter) of one of or a mixture of two or more of C2-C30 (preferably C2-C12, more preferably C2-C10) olefins (polyolefins obtainable by polymerization methods); and degraded polyolefins obtainable by mechanically, thermally, or chemically degrading high-molecular-weight polyolefins (the number average molecular weight (Mn) is preferably 50,000 to 150,000) (polyolefins obtainable by degradation methods).

Preferred among these are degraded polyolefins from the viewpoint of easy modification upon introduction of a carboxy group, a hydroxy group, an amino group, or an isocyanate group, and easy availability. Thermally degraded polyolefins are more preferred. The thermal degradation easily provides a low-molecular-weight polyolefin (Mn is preferably 1,000 to 100,000, more preferably 2,000 to 10,000) in which the average number of terminal double bonds per molecule is 1.5 to 2 as described later. The low-molecular-weight polyolefin is easily modified by introducing a group such as a carboxy group, a hydroxy group, an amino group, or an isocyanate group.

Examples of the fluorine compound (b1) having a double bond in the present invention include the compounds (b11) to (b19) described below. In the following structural formulas, Me represents a methyl group, Et represents an ethyl group, and Pr represents a propyl group.
(b11) Fluorine-containing alkyl ethylenes
   C₆F₁₃CH=CH₂, C₈F₁₇CH=CH₂, C₁₂F₂₅CH=CH₂, C₁₃F₂₇CH=CH₂, C₁₆F₃₃CH=CH₂, etc.
(b12) Fluorine-containing alkylaryls
   C₈F₁₇CH₂CH=CH₂, C₆F₁₃CH₂CH=CH₂, etc.
(b13) Compounds having a fluorine-containing alkyl group and a (meth)acryloyl group
   C₇F₁₅CH₂OCOCH=CH₂, C₇F₁₅CH₂OCOC(Me)=CH₂, CF₃(CF₂)₂CH₂OCOC(Me)=CH₂, CF₃(CF₂)₄(CH₂)₂OCOC(Me)=CH₂, CF₃(CF₂)₉(CH₂)₂OCOC(Me)=CH₂, C₈F₁₇(CH₂)₁₁OCOC(Me)=CH₂, C₇F₁₅CON(Et) (CH₂)₂OCOC(Me)=CH₂, C₆F₁₃SO₂N(Me)(CH₂)₂OCOCH=CH₂, C₈F₁₇SO₂N(Pr) (CH₂)₂OCOCH=CH₂, C₈F₁₇SO₂N(Me) (CH₂)₂OCOC(Me)=CH₂, C₈F₁₇SO₂N(Me) (CH₂)₁₀OCOCH₂CH=CH₂, C₈F₁₇SO₂N(CH₂CH₂OCOCH=CH₂)₂, HCF₂(CF₂)₇CH₂OCOC(Me)=CH₂, etc.
(b14) Maleic acid mono- or diesters having a fluorine-containing alkyl group
   C₆F₁₃(CH₂)₁₁OCOCH=CHCOOMe, C₆F₁₃(CH₂)₁₁OCOCH=CHCOOCH₂C₇F₁₅, etc.
(b15) Vinyl ethers or allyl ethers having a fluorine-containing alkyl group
   C₇F₁₅CH₂OCH=CH₂, C₇F₁₅CH₂OCH₂CH=CH₂, etc.
(b16) Compounds having a fluorine-containing alkyl group and a vinyl sulfone group
   C₆F₁₃SO₂NHCH₂SO₂CH=CH₂, etc.
(b17) Reaction products of amines having a fluorine-containing alkyl group (e.g., C₆F₁₃CH₂CH₂NH₂ and
   (C₆F₁₃CH₂CH₂)₂NH) and vinyl monomers (e.g., (meth) acrylic acid glycidyl, (meth)acrylic acid, and (meth)acrylic acid isocyanatoethyl)
(b18) Reaction products of alcohols having a fluorine-containing alkyl group (e.g., C₆F₁₃CH₂CH₂OH) and vinyl monomers (e.g., (meth)acrylic acid glycidyl, (meth)acrylic acid, and (meth)acrylic acid isocyanatoethyl)
(b19) Reaction products of carboxylic acids having a fluorine-containing alkyl group (e.g., C₆F₁₃COOH) and vinyl monomers (e.g., (meth)acrylic acid glycidyl, (meth)acrylic acid diethylaminoethyl, (meth)acrylic acid 2-hydroxyethyl, and (methylol) acrylamide).

Preferred among these examples of the fluorine compound (b1) are the fluorine-containing alkyl ethylenes (b11) from an industrial point of view.

An example of the compound (a2) in the present invention is one obtained by modifying the polyolefin (a1) having a polymerizable unsaturated bond with an α,β-unsaturated carboxylic acid or an α,β-unsaturated carboxylic anhydride. The α,β-unsaturated carboxylic acid and α,β-unsaturated carboxylic anhydride are exemplified below. Maleic anhydride is preferred from the viewpoint of reactivity.

Examples of the α,β-unsaturated carboxylic acid or α,β-unsaturated carboxylic anhydride include monocarboxylic acids, dicarboxylic acids, alkyl (C1-C4) esters of mono- or dicarboxylic acids, and mono- or dicarboxylic anhydrides. Specific examples thereof include (meth)acrylic acid ((meth)acrylic acid refers to acrylic acid or methacrylic acid, the same shall apply hereinafter), methyl (meth)acrylate, butyl (meth)acrylate, maleic anhydride, dimethyl maleate, fumaric acid, itaconic acid, itaconic anhydride, diethyl itaconate, citraconic acid, and citraconic anhydride.

Examples of the fluorine compound (b2) having a group capable of reacting with a carboxy group or an anhydride group include compounds having at least one fluorohydrocarbon group and, as the group capable of reacting with a carboxy group or an anhydride group, at least one group such as a hydroxy group, an amino group, or an epoxy group. These functional groups may be contained in combination.

Examples of the compound (b2-1) having a hydroxy group included in the examples of the fluorine compound (b2) include CF₃CH₂OH, CF₃(CF₂)₁₁CH₂OH (n = 1 to 20), CF₃(CH₂)₂OH, CF₃(CF₂)ₙ(CH₂)₂OH (n = 1 to 20), CF₃(CH₂)₃OH, CF₃(CF₂)ₙ(CH₂)₃OH (n = 1 to 20), CF₃(CH₂)₄OH, CF₃(CF₂)ₙ(CH₂)₄OH (n = 1 to 20), CF₃(CH₂)₅OH, CF₃(CF₂)ₙ(CH₂)₅OH (n = 1 to 20), CF₃(CH₂)₆OH, CF₃(CF₂)ₙ(CH₂)₆OH (n = 1 to 20), CF₂HCH₂OH, CF₂H(CF₂)ₙCH₂OH (n = 1 to 20), CF₂H(CH₂)₂OH, CF₂H(CF₂)ₙ(CH₂)₂OH (n = 1 to 20), CF₂H(CH₂)₃OH, CF₂H(CF₂)ₙ(CH₂)₃OH (n = 1 to 20), CF₂H(CH₂)₄OH, CF₂H(CF₂)ₙ(CH2)₄OH (n = 1 to 20), CF₂H(CH₂)₅OH, CF₂H(CF₂)ₙ(CH₂)₅OH (n = 1 to 20), CF₂H(CH₂)₆OH, CF₂H(CF₂)ₙ(CH₂)₆OH (n = 1 to 20), CF₃(CF₂)₂OCF(CF₃)CH₂OH, C₃F₇OCF(CF₃)CF₂OCF(CF₃)CH₂OH, (CF₃)₂CF(CH₂)₆OH, (CF₃)₂CHOH, CF₃CHFCF₂CH₂OH, HOCH₂(CF₂)₄CH₂OH, HOCH₂(CF₂)₆CH₂OH, and (CF₃)₂C(CH₃)CH₂OH.

Examples also include adducts of alkylene oxide (abbreviated as AO, the carbon number is 2 to 4) with these compounds. Examples of the AO include 1,2-ethylene oxide, 1,2- or 1,3-propylene oxide, and 1,2-, 1,3-, 1,4- or 2,3-butylene oxide.

Examples of the compound (b2-2) having an amino group included in the examples of the fluorine compound (b2) having a group capable of reacting with a carboxy group or an anhydride group include compounds prepared by replacing the hydroxy group of any of the examples of the compound (b2-1) with an amino group.

Examples of the compound having an epoxy group included in the examples of the fluorine compound (b2) include compounds prepared by replacing the hydroxy group of any of the examples of the compound (b2-1) with an epoxy group or a glycidyl ether group.

As for the (A2), the reaction of the compound (a2) obtainable by modifying the polyolefin (a1) with an α,β-unsaturated carboxylic acid or an α,β-unsaturated carboxylic anhydride, and the fluorine compound (b2) having a group capable of reacting with a carboxy group or an anhydride group can be performed as follows. For example, the carboxy group or anhydride group of the compound (a2) and a group of the compound (b2), such as the hydroxy group, amino group, or epoxy group may be reacted by an addition reaction or a dehydration condensation reaction according to a usual ester production method.

In the reaction, an organic solvent such as benzene, toluene, xylene, or chlorobenzene may be used. In order to enhance reactivity, the carboxy group or the anhydride group may be first converted into an acid halide group, followed by subjecting to a condensation reaction.

In the reaction, a catalyst may be used. Examples of the catalyst include inorganic acids (e.g., sulfuric acid and hydrochloric acid), organic sulfonic acids (e.g., methanesulfonic acid, paratoluene sulfonic acid, xylene sulfonic acid, and naphthalene sulfonic acid), and organic metal compounds (e.g., dibutyl tin oxide, tetraisopropoxy titanate, bistriethanolamine titanate, and titanium potassium oxalate). The amount of the catalyst used is preferably 5% by weight or less, more preferably 0.001 to 1.0% by weight based on the weight of the compound (a2) from the viewpoint of reactivity and appearance.

As for the (A3), the polyolefin (a1) may be oxidized or modified through hydroformylation by introducing a carbonyl group into the polyolefin (a1) through oxidization with oxygen and/or ozone (an oxidation method) or hydroformylation by an oxo method.

Introduction of a carbonyl group by an oxidation method can be carried out by a known method such as the method described in US 3,692,877 B. Introduction of a carbonyl group through hydroformylation can be carried out by various methods including known methods such as the method described in Macromolecules, vol. 31, p. 5943.

### <Chargeability imparting agent (Z) for thermoplastic resins>

The chargeability imparting agent (Z) for thermoplastic resins of the present invention contains the organic fluorine-modified polyolefin (A). The chargeability imparting agent (Z) for thermoplastic resins is used as a chargeability imparting agent for the thermoplastic resin (B) described later (preferably a chargeability imparting agent for thermoplastic resin nonwoven fabrics). Preferably, the chargeability imparting agent (Z) is useful as a chargeability imparting agent for a polyolefin resin (B1), particularly for a chargeability imparting agent for polyolefin resin fibers and a chargeability imparting agent for polyolefin resin nonwoven fabrics.

The agent (Z) may further contain a known additive for resins, such as a compatibilizing agent, if necessary, as long as it does not impair the effects of the present invention. The amount of the additive for resins in the agent (Z) based on the weight of the agent (Z) is preferably 0.1 to 20% by weight, more preferably 1 to 10% by weight from the viewpoint of the chargeability and appearance of the charged nonwoven fabric (Y).

### <Chargeable resin composition (Y0)>

The chargeable resin composition (Y0) of the present invention contains the chargeability imparting agent (Z) for thermoplastic resins and the thermoplastic resin (B).

Examples of the thermoplastic resin (B) include
polyolefin resins (B1) (e.g., polypropylene (PP), polyethylene (PE), ethylene-propylene copolymers, ethylenevinyl acetate copolymer resin (EVA), and ethyleneethylacrylate copolymer resin);
poly(meth)acrylic resins (B2) (e.g., polymethylmethacrylate);
polystyrene resins (B3) (e.g., vinyl group-containing aromatic hydrocarbon homopolymers and copolymers containing a vinyl group-containing aromatic hydrocarbon and at least one selected from the group consisting of (meth)acrylic acid esters, (meth)acrylonitrile, and butadiene, as structure units, such as polystyrene (PS), a styrene/acrylonitrile copolymer (SAN resin), an acrylonitrile/butadiene/styrene copolymer (ABS resin), a methyl methacrylate/butadiene/styrene copolymer (MBS resin), and a styrene/methyl methacrylate copolymer (MS resin));
polyester resins (B4) (polyethylene terephthalate, polybutylene terephthalate, polycyclohexanedimethylene terephthalate, polybutylene adipate, and polyethylene adipate);
polyamide resins (B5) (e.g., nylon 66, nylon 69, nylon 612, nylon 6, nylon 11, nylon 12, nylon 46, nylon 6/66, and nylon 6/12);
polycarbonate resins (B6) (e.g., polycarbonate and polycarbonate/ABS alloy resin (PC/ABS));
polyacetal resins (B7); polyphenylene ether resin (B8); and mixtures of two or more of these.

The thermoplastic resin (B) is preferably at least one selected from the group consisting of the resins (B1) to (B7) from the viewpoint of the chargeability and appearance of the charged nonwoven fabric (Y) described later, more preferably the resin (B1) and at least one selected from the group consisting of the resins (B2) to (B7), still more preferably the resin (B1).

The content of the chargeability imparting agent (Z) for thermoplastic resins in the thermoplastic resin composition based on the weight of the resin (B) is preferably 0.1 to 30% by weight, more preferably 0.5 to 20% by weight, still more preferably 1 to 15% by weight, particularly preferably 3 to 10% by weight, from the viewpoint of chargeability and appearance. The content of the organic fluorine-modified polyolefin (A) in the chargeable resin composition based on the weight of the resin (B) is preferably 0.1 to 28% by weight, more preferably 0.5 to 18% by weight, still more preferably 1 to 12% by weight, particularly preferably 3 to 9% by weight, from the viewpoint of chargeability and appearance.

The chargeable resin composition may contain a different additive (C), if necessary, as long as it does not impair the effects of the present invention. Examples of the additive (C) include a colorant (C1), a release agent (C2), an antioxidant (C3), a flame retardant (C4), an ultraviolet absorber (C5), an antibacterial agent (C6), and a filler (C7). Two or more of these examples of the additive (C) may be used in combination.

Examples of the colorant (C1) include inorganic pigments (e.g., white pigments, cobalt compounds, iron compounds, and sulfides), organic pigments (e.g., azo pigments and polycyclic pigments), and dyes (e.g., azo dyes, indigoide dyes, sulfur dyes, alizarine dyes, acridine dyes, thiazole dyes, nitro dyes, and aniline dyes).

Examples of the release agent (C2) include an alkyl (C1-C4) ester of a C12-C18 fatty acid (e.g., butyl stearate), a glycol (C2-C8) ester of a C2-C18 fatty acid (e.g., ethylene glycol monostearate), a polyvalent (trivalent or more) alcohol ester of a C2-C18 fatty acid (e.g., hydrogenated castor oil), and a liquid paraffin.

Examples of the antioxidant (C3) include phenol compounds (e.g., monocyclic phenols such as 2,6-di-t-butylp-cresol, bisphenols such as 2,2'-methylenebis(4-methyl-6-t-butylphenol), and polycyclic phenols such as 1,3,5-trimethyl-2,4,6-tris(3,5-di-t-butyl-4-hydroxybenzyl)benzene) and amine compounds (e.g., octylated diphenylamine).

Examples of the flame retardant (C4) include halogencontaining flame retardants, nitrogen-containing flame retardants, and silicon-containing flame retardants.

Examples of the ultraviolet absorber (C5) include benzotriazoles (e.g., 2-(2'-hydroxy-5'-methylphenyl) benzotriazole), benzophenones (e.g., 2-hydroxy-4-methoxybenzophenone), salicylates (e.g., phenyl salicylate), and acrylates (e.g., 2-ethylhexyl-2-cyano-3,3-diphenyl acrylate).

Examples of the antibacterial agent (C6) include benzoic acid, sorbic acid, halogenated phenols, organic iodine, nitriles (e.g., 2,4,5,6-tetrachloroisophthalonitrile), thiocyanates (e.g., methylene biscyanocyanate), N-haloalkyl thioimides, copper agents (e.g., copper 8-oxyquinoline), benzimidazole, benzothiazole, trihaloallyl, triazole, quaternary ammonium compounds, and pyridine compounds.

Examples of the filler (C7) include inorganic fillers (e.g., calcium carbonate, talc, and clay) and organic fillers (e.g., urea and calcium stearate).

The total content of the additive (C) based on the weight of the thermoplastic resin (B) is preferably 45% by weight or less, more preferably 0.001 to 30% by weight, still more preferably 0.01 to 10% by weight, from the viewpoint of appearance.

The content of the additive (C1) based on the weight of the thermoplastic resin (B) is preferably 0.1 to 3% by weight, more preferably 0.2 to 2% by weight, from the viewpoint of appearance.

The content of each of the additives (C2), (C3), and (C5) based on the weight of the thermoplastic resin (B) is preferably 0.01 to 3% by weight, more preferably 0.05 to 1% by weight, from the viewpoint of appearance.

The content of each of the additives (C4) and (C6) based on the weight of the thermoplastic resin (B) is preferably 0.5 to 20% by weight, more preferably 1 to 10% by weight, from the viewpoint of appearance.

The content of the additive (C7) based on the weight of the thermoplastic resin (B) is preferably 0.5 to 10% by weight, more preferably 1 to 5% by weight, from the viewpoint of appearance.

The chargeable resin composition (Y0) of the present invention is obtainable by melt-mixing the chargeability imparting agent (Z) for thermoplastic resins of the present invention, the thermoplastic resin (B), and, if needed, the additive (C). The method of melt-mixing may be, for example, a method including mixing pelletized or powdered components in an appropriate mixer (e.g., Henschel mixer) and then melt-mixing the mixture in an extruder for pelletization.

The components may be added in any order for the melt-mixing. For example, the melt-mixing may be performed by the following methods.
(1) A method in which the agent (Z) is melt-mixed, and then the resin (B) and, if needed, the additive (C) are added thereto all at once and melt-mixed
(2) A method in which the agent (Z) is melt-mixed, part of the resin (B) is melt-mixed first with the agent (Z) to prepare a high-concentration composition (masterbatch resin composition) of the agent (Z), and then the remaining resin (B) and, if needed, the additive (C) are melt-mixed therewith (masterbatch method or master pellet method)

The concentration of the agent (Z) in the masterbatch resin composition in the method (2) is preferably 40 to 80% by weight, more preferably 50 to 70% by weight.

Of the methods (1) and (2), the method (2) is preferred because the agent (Z) is easily dispersed in the resin (B) efficiently.

### <Charged nonwoven fabric (Y)>

The charged nonwoven fabric (Y) of the present invention is obtainable by processing the chargeable resin composition (Y0).

The charged nonwoven fabric (Y) of the present invention may be produced using the chargeable resin composition (Y0), for example, by a direct process such as a spun-bonding process, a melt-blowing process, or a flash spinning process, or by a method in which a card web is obtained from short fibers and is subjected to fiber consolidation through hydroentanglement, embossing, or needle punching.

The shape of the cross section of the fibers of the nonwoven fabric is not limited, and may be circular, irregular, or hollow. Various cross-sectional shapes can be obtained by appropriately selecting the shape of a spinneret.

The following specifically describes the method of producing the nonwoven fabric.

### (i) Spun-bonding process

The chargeable resin composition is melted by heating; the molten composition is discharged from a spinneret; the spun extruded filaments are quenched using various quench devices including a horizontal blowing device and a ring blowing device and are drawn with a takeup means (e.g., a suction device such as an air sucker or a roller) to obtain thin filaments; subsequently, a group of filaments discharged from the suction device is separated; and the separated fibers are deposited on the screen of a moving deposition machine such as a conveyor to obtain massive fibers. Then, the massive fibers on the moving deposition machine are partially thermocompressed using a partial thermocompression bonding device such as a heated embossing device or an ultrasonic fusion device to obtain a nonwoven fabric.

### (ii) Melt-blowing process

At the same time as the composition is melt-spun and extruded from spinning orifices, the melt was blown by high-temperature, high-velocity air with almost the same temperature as the spinning temperature from a slit-shaped air outlet placed adjacent to the spinning orifices. The resulting fibrillated ultrafine fiber stream is collected on a moving conveyer net, and a non-woven fabric is obtained.

Of these methods of producing resin nonwoven fabrics, a spun-bonding process and a melt-blowing process are preferred from the viewpoint of productivity, and a melt-blowing process is more preferred.

The present invention also encompasses a method of producing a charged nonwoven fabric, the method including processing the chargeable resin composition (Y0) containing the chargeability imparting agent (Z) for thermoplastic resins and the thermoplastic resin (B) to obtain the charged nonwoven fabric. Preferably, the chargeable resin composition (Y0) is processed by a spun-bonding process or a melt-blowing process to obtain the charged nonwoven fabric.

The chargeability and appearance (surface appearance) of the charged nonwoven fabric (Y) of the present invention can be evaluated from the surface appearance and frictional static charge of a film obtained by melting and molding the nonwoven fabric.

The charged nonwoven fabric (Y) of the present invention can be used for various applications, and can be suitably used for filters, masks, gauze, bandages, paper diapers, nonwoven fabrics for cleaning, chemical wipes, and the like.

The present invention also encompasses:
use of the organic fluorine-modified polyolefin (A) to impart chargeability to thermoplastic resins, the polyolefin (A) containing at least one organic group in at least one of a molecular end or a molecular side chain of the polyolefin, the at least one organic group containing a fluorohydrocarbon group;
use of the organic fluorine-modified polyolefin (A) to impart chargeability to nonwoven fabrics, the polyolefin (A) containing at least one organic group in at least one of a molecular end or a molecular side chain of the polyolefin, the at least one organic group containing a fluorohydrocarbon group; and
a method of imparting chargeability to thermoplastic resins, the method including mixing a thermoplastic resin and the organic fluorine-modified polyolefin (A) containing at least one organic group in at least one of a molecular end or a molecular side chain of the polyolefin, the at least one organic group containing a fluorohydrocarbon group.

### EXAMPLES

Examples of the present invention are described below, but the present invention is not limited to these examples. In the following description, "part(s)" refers to "part(s) by weight".

The acid value (mg KOH/g) was measured by the method according to JIS K 0070 (1992).

The number average molecular weight (Mn) was measured by gel permeation chromatography (GPC) under the above-described conditions.

### <Production Example 1>

### (Production of polyolefin (a1-01-α) with at least one end being modifiable)

A reaction vessel equipped with a nitrogen introduction tube, an exhaust gas discharge tube, a stirrer, and a cooling tube was charged with 100 parts of a polyolefin (Mw 200,000) containing 98 mol% propylene and 2 mol% ethylene as structural units in a nitrogen atmosphere. While nitrogen was introduced into the gas phase, the contents were melted by heating using a mantle heater and thermally degraded at 360°C for 40 minutes with stirring. Thus, a polyolefin (a1-01-α) with at least one end being modifiable was obtained. The polyolefin (a1-01-α) had 1.7 double bonds per 1,000 carbon atoms and an Mn of 44,000.

### <Production Example 2>

### (Production of compound (a2-α) prepared by modifying polyolefin having polymerizable unsaturated bond with α,β-unsaturated carboxylic anhydride)

A stainless-steel pressure-resistant reaction vessel equipped with a stirrer, a thermometer, a heating and cooling device, a nitrogen introduction tube, and a decompression device was charged with 90 parts of the polyolefin (a1-01-α) with at least one end being modifiable, 10 parts of maleic anhydride, and 30 parts of xylene. The contents were mixed homogeneously, followed by nitrogen purge. The mixture was hermetically heated to 200°C with stirring to be melted, followed by reacting at that temperature for 10 hours. Then, excessive maleic anhydride and xylene were distilled off under reduced pressure (0.013 MPa or less) at 200°C over three hours. Thus, 91 parts of a compound (a2-α) was obtained. The compound (a2-α) had an acid value (mg KOH/g) of 2.5 and an Mn of 44,200.

### <Production Example 3>

### (Production of compound (a2-β) prepared by modifying polyolefin having polymerizable unsaturated bond with α,β-unsaturated carboxylic anhydride)

The same pressure-resistant reaction vessel as that in Production Example 2 was charged with 90 parts of a low molecular weight polypropylene obtained by thermal degradation (obtained by thermal degradation of polypropylene (MFR: 10 g/10 min) at 410 ± 0.1°C under nitrogen aeration (80 mL/min) for 16 minutes, Mn: 3,400, number of double bonds per 1,000 carbon atoms: 7.0, average number of double bonds per molecule: 1.8, content of polyolefin with both ends being modifiable: 90% by weight), 10 parts of maleic anhydride, and 30 parts of xylene. The contents were mixed homogeneously, followed by nitrogen purge. The mixture was hermetically heated to 200°C with stirring to be melted, followed by reacting at that temperature for 10 hours. Then, excessive maleic anhydride and xylene were distilled off under reduced pressure (0.013 MPa or less) at 200°C over three hours. Thus, 95 parts of a compound (a2-β) was obtained. The compound (a2-β) had an acid value of 27.5 and an Mn of 3,600.

### <Production Example 4>

### (Production of organic fluorine-modified polyolefin (A-1))

The same pressure-resistant reaction vessel as that in Production Example 2 was charged with 180 parts of xylene, 40 parts of a low molecular weight polyolefin ("SANWAX 161P" available from Sanyo Chemical Industries, Ltd.), and 60 parts of a perfluoroalkylethylene (Daikin Industries, Ltd.). The contents were heated to 125°C with stirring in a nitrogen atmosphere. To the mixture was added dropwise 1.25 parts of di-t-butyl peroxide at that temperature over 10 minutes, followed by stirring for two hours. Then, 0.63 parts of di-t-butyl peroxide was added dropwise thereto at 125°C over 10 minutes, followed by stirring at that temperature for two hours. Xylene was distilled off under reduced pressure (0.013 MPa or less) at 125°C over two hours. Thus, an organic fluorine-modified polyolefin (A-1) containing in a molecular side chain thereof an organic group containing a fluorohydrocarbon was obtained. The polyolefin (A-1) had a fluorine content of 50% by weight and an Mn of 24,000.

### <Production Example 5>

### (Production of organic fluorine-modified polyolefin (A-2))

An organic fluorine-modified polyolefin (A-2) was obtained as in Production Example 4, except that 40 parts of a low molecular weight polyolefin ("SANWAX 161P" available from Sanyo Chemical Industries, Ltd.) and 60 parts of a perfluoroalkylethylene (Daikin Industries, Ltd.) were changed to 80 parts of 1-tetracosene and 20 parts of a perfluoroalkylethylene (Daikin Industries, Ltd.). The polyolefin (A-2) had a fluorine content of 15% by weight and an Mn of 16,000.

### <Production Example 6>

### (Production of organic fluorine-modified polyolefin (A-3))

The same pressure-resistant reaction vessel as that in Production Example 2 was charged with 98 parts of the compound (a2-α) and 2 parts of 1H,1H,2H,2H-heptadecafluoro-1-decanol. The contents were heated to 170°C with stirring, followed by stirring at that temperature for one hour. Then, unreacted 1H,1H,2H,2H-heptadecafluoro-1-decanol was distilled off under reduced pressure (0.013 MPa or less) at 170°C over two hours. Thus, an organic fluorine-modified polyolefin (A-3) containing in a molecular side chain thereof an organic group containing a fluorohydrocarbon group was obtained. The polyolefin (A-3) had a fluorine content of 1% by weight and an Mn of 44,500.

### <Production Example 7>

### (Production of organic fluorine-modified polyolefin (A-4))

An organic fluorine-modified polyolefin (A-4) was obtained as in Production Example 6, except that 98 parts of the compound (a2-α) and 2 parts of 1H,1H,2H,2H-heptadecafluoro-1-decanol were changed to 60 parts of the compound (a2-β) and 40 parts of 1H,1H,2H,2H-heptadecafluoro-1-decanol. The polyolefin (A-4) had a fluorine content of 25% by weight and an Mn of 4,500.

### <Production Example 8>

### (Production of organic fluorine-modified polyolefin (A-5))

The same pressure-resistant reaction vessel as that in Production Example 2 was charged with 98 parts of the compound (a2-α) and 2 parts of 1H,1H-tridecafluoroheptylamine. The contents were heated to 170°C with stirring, followed by stirring at that temperature for one hour. Then, unreacted 1H,1H-tridecafluoroheptylamine was distilled off under reduced pressure (0.013 MPa or less) at 170°C over two hours. Thus, an organic fluorine-modified polyolefin (A-5) containing in a molecular end thereof an organic group containing a fluorohydrocarbon group was obtained. The polyolefin (A-5) had a fluorine content of 1% by weight and an Mn of 44,500.

### <Production Example 9>

### (Production of organic fluorine-modified polyolefin (A-6))

The same pressure-resistant reaction vessel as that in Production Example 2 was charged with 95 parts of an acid-modified polyolefin ("UMEX 1001" available from Sanyo Chemical Industries, Ltd.) and 5 parts of 1H,1H,2H,2H-heptadecafluoro-1-decanol. The contents were heated to 170°C with stirring, followed by stirring at that temperature for one hour. Then, unreacted 1H,1H,2H,2H-heptadecafluoro-1-decanol was distilled off under reduced pressure (0.013 MPa or less) at 170°C over two hours. Thus, an organic fluorine-modified polyolefin (A-6) containing in a molecular side chain thereof an organic group containing a fluorohydrocarbon group was obtained. The polyolefin (A-6) had a fluorine content of 3% by weight and an Mn of 15,500.

### <Production Example 10>

### (Production of organic fluorine-modified polyolefin (A-7))

An organic fluorine-modified polyolefin (A-7) was obtained as in Production Example 9, except that 95 parts of an acid-modified polyolefin ("UMEX 1001" available from Sanyo Chemical Industries, Ltd.) and 5 parts of 1H,1H,2H,2H-heptadecafluoro-1-decanol were changed to 95 parts of an oxidized polyolefin (Sanyo Chemical Industries, Ltd., oxidized polyolefin wax, acid value: 19, Mn: 3,500) and 5 parts of 1H,1H,2H,2H-heptadecafluoro-1-decanol. The polyolefin (A-7) had a fluorine content of 4% by weight and an Mn of 4,500.

### <Production Example 11>

### (Production of organic fluorine-modified polyolefin (A-8))

The same pressure-resistant reaction vessel as that in Production Example 2 was charged with 180 parts of xylene, 99 parts of a high molecular weight polyolefin ("SUNFINE" available from Asahi Kasei Corporation), and 1 part of tetrafluoroethylene (Daikin Industries, Ltd.). The contents were heated to 125°C with stirring in a nitrogen atmosphere. To the mixture was added dropwise 1.25 parts of di-t-butyl peroxide at that temperature over 10 minutes, followed by stirring for two hours. Then, 0.63 parts of di-t-butyl peroxide was added dropwise thereto at 125°C over 10 minutes, followed by stirring at that temperature for two hours. Xylene was distilled off under reduced pressure (0.013 MPa or less) at 125°C over two hours. Thus, an organic fluorine-modified polyolefin (A-8) containing in a molecular side chain thereof an organic group containing a fluorohydrocarbon was obtained. The polyolefin (A-8) had a fluorine content of 1% by weight and an Mn of 914,000.

### <Production Example 12>

### (Production of organic fluorine-modified polyolefin (A-9))

The same pressure-resistant reaction vessel as that in Production Example 2 was charged with 180 parts of xylene, 34 parts of a high molecular weight polyolefin ("HI-ZEX MILLION" available from Mitsui Chemicals, Inc.), and 66 parts of tetrafluoroethylene (Daikin Industries, Ltd.). The contents were heated to 125°C with stirring in a nitrogen atmosphere. To the mixture was added dropwise 1.25 parts of di-t-butyl peroxide over 10 minutes, followed by stirring for two hours. Then, 0.63 parts of di-t-butyl peroxide was added dropwise thereto at 125°C over 10 minutes, followed by stirring at that temperature for two hours. Xylene was distilled off under reduced pressure (0.013 MPa or less) at 125°C over two hours. Thus, an organic fluorine-modified polyolefin (A-9) containing in a molecular side chain thereof an organic group containing a fluorohydrocarbon. The polyolefin (A-9) had a fluorine content of 50% by weight and an Mn of 952,000.

### <Examples 1 to 12, Comparative Example 1>

The components to be compounded were blended according to the compounding formulation (parts) shown in Table 1 using a Henschel mixer for three minutes and then melt-kneaded in a twin-screw extruder with vent at 100 rpm at 170°C with a residence time of five minutes. Thus, chargeability imparting agents (Z) for thermoplastic resins were obtained.

For comparison, a mixture of 50 parts of triphenyl phosphite and 50 parts of dilauryl thiodipropionate was prepared as a chargeability imparting agent (Comparative Example Z-1) for thermoplastic resins of Comparative Example 1.

Table 1 shows the compounding formulation of the chargeability imparting agents for thermoplastic resins and the fluorine contents (% by weight) of the organic fluorine-modified polyolefins (A).

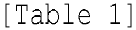

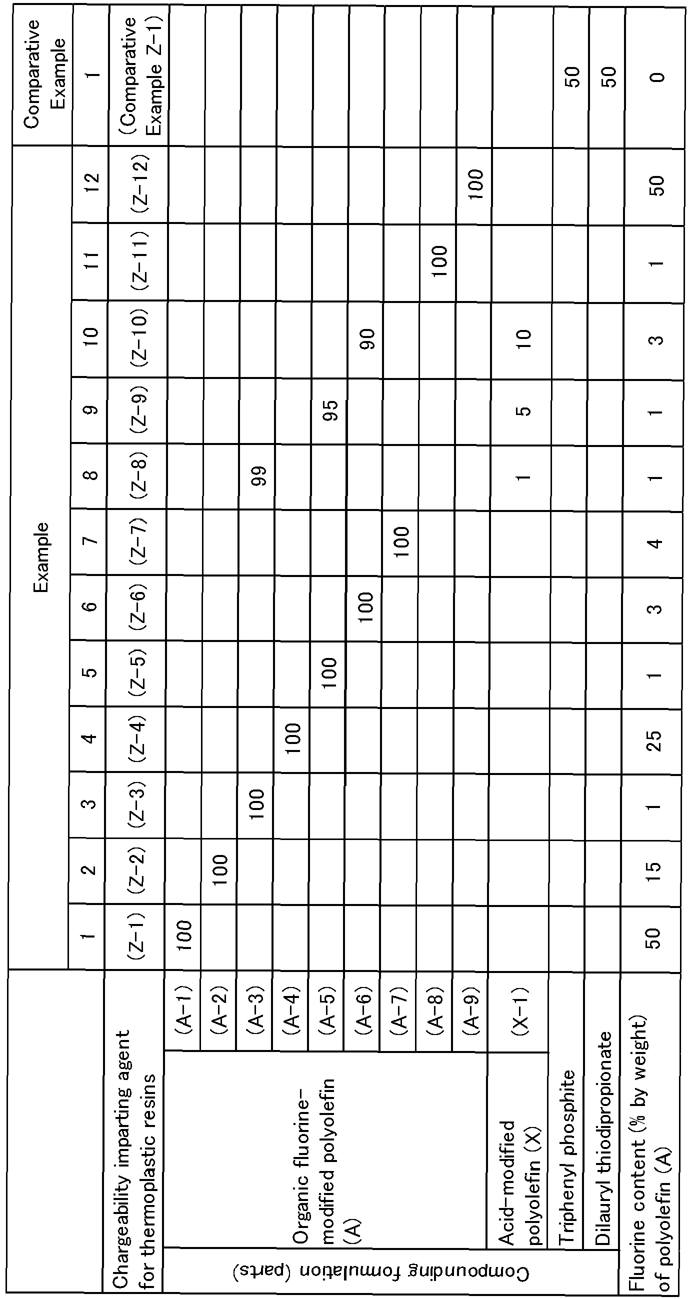

The content of the symbol in Table 1 is as follows.
(X-1): Acid-modified polyolefin (X) (compatibilizing agent), ("UMEX 1001" available from Sanyo Chemical Industries, Ltd.)

### <Examples 13 to 31, Comparative Examples 2 to 5>

The components to be compounded were blended according to the compounding formulation (parts) shown in Table 2 using a Henschel mixer for three minutes and then melt-kneaded in a twin-screw extruder with vent at 100 rpm at 200°C with a residence time of five minutes. Thus, chargeable resin compositions (Y0) were obtained.

A charged nonwoven fabric (Y) was obtained using each chargeable resin composition (Y0) by the melt-blowing production method described below. The charged nonwoven fabric (Y) was evaluated according to the evaluation methods described below.

Table 2 shows the results.

### <Melt-blowing production method>

Each chargeable resin composition (Y0) was extruded, as a molten resin liquid, at a nozzle temperature of 230°C, an extrusion pressure of 6 kg/cm², a hot air temperature of 240°C, and an air pressure of 2.1 kg/cm², from a melt-blowing spinneret nozzle having a temperature controlled to 230°C. The resulting melt-blown nonwovens were heatembossed at 100°C to fuse the fibers, whereby a nonwoven fabric having an embossed pattern, a fiber diameter of 20 dtex, and an area weight of 22 g/m² was obtained.

### <Test for properties>

### (1) Surface appearance

Each nonwoven fabric was melted and pressed at 200°C at 5.0 MPa using a press machine (model number "TABLE TYPE TEST PRESS SA-302" available from Tester Sangyo Co,. Ltd.) to form a film.

The appearance of the surface of a test piece (vertical size: 4 cm × horizontal size: 8 cm) of the film was visually observed and evaluated based on the following criteria.

### <Evaluation criteria>

Excellent: favorable with no abnormalities
Good: favorable with almost no abnormalities
Fair: a little surface roughness, a few blisters, or the like was observed
Poor: surface roughness, blisters, or the like was observed

### (2) Chargeability (frictional static charge) (unit: kV)

According to JIS L-1094 (2014), three test pieces (vertical size: 4 cm × horizontal size: 8 cm) of each nonwoven fabric were rubbed with a cotton friction cloth. The static charges of the three test pieces were measured with a frictional static charge meter and averaged.

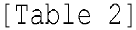

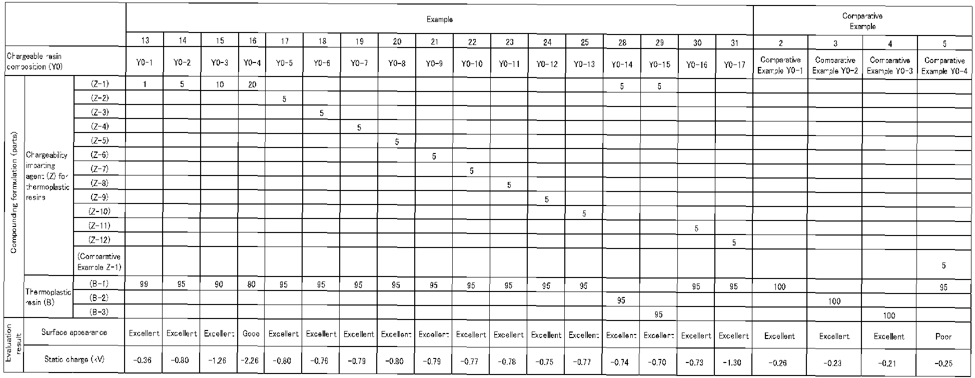

The contents of the symbols in Table 2 are as follows.
(B-1): Commercially available polypropylene (trade name: "SunAllomer PL500A" available from SunAllomer Ltd., Mn: 300,000)
(B-2): Commercially available polyethylene (trade name: "Novatec HJ490" available from Japan Polyethylene Corporation, Mn: 300,000)
(B-3): Commercially available ethylene/propylene copolymer (trade name: "SunAllomer PB222A" available from SunAllomer Ltd., Mn: 350,000)

Tables 1 and 2 demonstrate that the chargeability imparting agents (Z) for thermoplastic resins of the present invention impart better appearance (surface appearance) to the charged nonwoven fabrics (Y) than the comparative chargeability imparting agent and are found to be excellent in chargeability.

### INDUSTRIAL APPLICABILITY

The chargeability imparting agents (Z) for thermoplastic resins of the present invention are used as a chargeability imparting agent for the thermoplastic resin (B). In particular, the chargeability imparting agents (Z) are useful as a chargeability imparting agent for the polyolefin resin (B1).

The charged nonwoven fabrics (Y) of the present invention can be used for various purposes, and can be suitably used for, for example, filters, masks, gauzes, bandages, paper diapers, nonwoven fabrics for cleaning, and chemical wipes.

## Claims

1. A chargeability imparting agent (Z) for thermoplastic resins, comprising
an organic fluorine-modified polyolefin (A) containing at least one organic group in at least one of a molecular end or a molecular side chain of the polyolefin, the at least one organic group containing a fluorohydrocarbon group.

2. The chargeability imparting agent for thermoplastic resins according to claim 1,
wherein the organic fluorine-modified polyolefin (A) has a fluorine content of 0.1 to 50% by weight based on a weight of the organic fluorine-modified polyolefin (A).

3. The chargeability imparting agent for thermoplastic resins according to claim 1 or 2,
wherein the organic fluorine-modified polyolefin (A) has a number average molecular weight of 500 to 1,000,000.

4. The chargeability imparting agent for thermoplastic resins according to any one of claims 1 to 3,
wherein the organic fluorine-modified polyolefin (A) is at least one selected from the group consisting of the following (A1) to (A3):
(A1) a copolymer containing as structural units a fluorine compound (b1) having a double bond and at least one of a polyolefin (a1) having a polymerizable unsaturated bond or an olefin (am);
(A2) a reaction product of a compound (a2) obtainable by modifying a polyolefin (a1) having a polymerizable unsaturated bond with an α,β-unsaturated carboxylic acid or an α,β-unsaturated carboxylic anhydride, and a fluorine compound (b2) having a group capable of reacting with a carboxy group or an anhydride group; and
(A3) a reaction product of a compound (a3) obtainable by oxidizing or modifying through hydroformylation a polyolefin (a1) having a polymerizable unsaturated bond, and a fluorine compound (b2) having a group capable of reacting with a carboxy group or an anhydride group.

5. The chargeability imparting agent for thermoplastic resins according to any one of claims 1 to 4, which is for thermoplastic resin nonwoven fabrics.

6. A chargeable resin composition (Y0) comprising:
the chargeability imparting agent (Z) for thermoplastic resins according to any one of claims 1 to 5; and
a thermoplastic resin (B).

7. The chargeable resin composition according to claim 6,
wherein the chargeable resin composition has a content of the chargeability imparting agent (Z) for thermoplastic resins of 0.1 to 25% by weight based on a weight of the thermoplastic resin (B).

8. A charged nonwoven fabric (Y) obtainable by processing the chargeable resin composition (Y0) according to claim 6 or 7.
